# EUROPÄISCHE PATENTSCHRIFT

(11) **EP 0 546 405 B1**
(45) Veröffentlichungstag und Bekanntmachung des Hinweises auf die Patenterteilung: **03.09.1997**
(21) Anmeldenummer: 92120370.9
(22) Anmeldetag: 28.11.1992
(51) Int. Cl.: F16L 19/08, F16L 47/04

(54) **Rohranschlussverbindung**
Pipe coupling
Raccord de tuyaux

(30) Priorität: 10.12.1991 DE 4140721; 25.06.1992 DE 4220814
(43) Veröffentlichungstag der Anmeldung: 16.06.1993
(73) Patentinhaber: WIRA FAHRZEUG- UND MASCHINENTEILE GmbH, D-51688 Wipperfürth (DE)
(72) Erfinder: Grond, Klaus, Dipl.-Ing., D-4690 Herne 2 (DE); Stefer, Karl-Heinz, D-5272 Wipperfürth (DE)
(74) Vertreter: Herrmann-Trentepohl, Werner, Dipl.-Ing.

(56) Entgegenhaltungen:
- EP-A- 0 410 843
- CH-A- 666 950
- DE-U- 9 203 457
- FR-A- 1 166 054
- FR-A- 1 177 068
- GB-A- 908 044

## Beschreibung

Die Erfindung bezieht sich auf eine Steckverbindung für Rohre, insbesondere Kunststoffrohre mit einem Anschlußgehäuse mit darin angeordneter Stützhülse.

Derartige Steckverbindungen werden beispielsweise zum Anschluß von Druckleitungen an Druckbehälter oder Ventilgehäuse verwendet. Diese bekannten Steckverbindungen sind von den ebenfalls bekannten Schraubverbindungen streng zu unterscheiden. Während die Steckverbindung mit darin angeordneter Stützhülse mit einem Anschluß verschraubt und anschließend das Rohr in das Anschlußgehäuse eingesteckt wird, werden Schraubverbindungen in anderer Art und Weise mit dem Anschluß verbunden. Dort muß zunächst das Anschlußgehäuse sowie ein Schneid- oder Klemmring auf und die Stützhülse in das Rohr eingeschoben werden. Anschließend wird das Anschlußgehäuse zusammen mit dem eingeschobenen Rohr mit dem Anschluß verschraubt.

Aus der DE-OS 33 25 350 ist eine Steckverbindung für Kunststoffrohrleitungen bekannt, welche ein Anschlußgehäuse für einen Anschluß aufweist. Das Anschlußgehäuse ist hierbei als Schraube ausgebildet und mit einem Außengewinde versehen. Dementsprechend kann eine derartige Steckverbindung auch nur bei Anschlüssen mit Innengewinde verwendet werden. Die direkte Verwendung bei einem Anschluß, der ein Außengewinde und genormte Bohrungsformen aufweist (z. B. DIN 3861, 3862, 3863) sowie nach internationalen Normen (z. B. JIC, SAE, PTT) und spezieller Anwendernormen ausgelegt ist, ist ausgeschlossen. Ermöglicht wird eine Verwendung dieser bekannten Steckverbindung bei einem genormten Anschluß mit Außengewinde nur dadurch, daß die Steckverbindung mit einem besonderen Verbindungsteil verbunden wird, was wiederum mit dem Anschluß verbindbar ist.

Vorbekannt ist ferner eine Schraubverbindung (EP-A 0 410 843), welche die eingangs für Schraubverbindungen beschriebene Handhabung beim Anschluß eines Kunststoffrohres an einen mit einem Außengewinde versehenen Anschlußstutzen durch ein mit Innengewinde versehenes Anschlußgehäuse vorraussetzt. Dieses Anschlußgehäuse weist in einem Einbauraum einen Gegenring auf, mit dem der Rohrmantel beim Aufweiten durch die eingeführte Stützhülse verpreßt wird, bevor das als Überwurfmutter ausgebildete Anschlußgehäuse auf dem Rohrende ausgerichtet wird. Nach dem Aufschrauben der Überwurfmutter auf den Anschlußstutzen verspannen sich Kegelflächen des Gegenringes mit ihnen entsprechenden Kegelflächen im Anschlußgehäuse und an einem Ringbund der Stützhülse.

Ferner ist eine derartige Schraubverbindung bekannt (CH-A 666 950), bei der die Stützhülse mit einem Anschlußstutzen einteilig ausgebildet ist, der ein Außengewinde aufweist, auf das das Anschlußgehäuse mit seinem Innengewinde aufgeschraubt wird. Hierbei tritt die Verspannung des Rohrendes mit der Stützhülse erst beim Aufschrauben auf den Anschlußstutzen ein und wird durch einen Klemmring bewirkt, der auf einer Seite mit einem Federpaket belastet ist.

Aufgabe der Erfindung ist es, eine Rohranschlußverbindung der eingangs genannten Art zur Verfügung zu stellen, welche die Nachteile des Standes der Technik vermeidet, wobei Funktionssicherheit, Austauschbarkeit und Einfachheit sowie der Einsatz von herkömmlichen genormten Anschlußstutzen möglich sein soll.

Diese Aufgabe wird erfindungsgemäß mit den Merkmalen der selbständigen Ansprüche 1 und 2 gelöst.

Eine derartige Steckverbindung bietet gleich mehrere Vorteile. Zum einen kann die Steckverbindung auf jeden Anschluß mit Außengewinde aufgeschraubt werden. Da bei der Erfindung die Steckverbindung direkt mit dem genormten Anschlußstutzen verbunden wird, ist kein Verbindungs- oder Zwischenstück erforderlich. Des weiteren ergibt sich der Vorteil, daß an der Außenseite des Anschlußstutzens kein umlaufender Bund oder Anschlag erforderlich ist, um die entsprechende Gewindevorspannung zum Verschrauben bzw. Festschrauben des Anschlusses aufzubringen. Üblicherweise ist ein derartiger Bund oder eine derartige Kante als Gegenlager für das auf ein Außengewinde aufgeschraubte Anschlußgehäuse erforderlich, um dieses festzuschrauben. Bei der Erfindung entfällt jedoch ein derartiger Bund oder dergleichen, da sich die Stützhülse oder das Dicht- und Halteelement an der Bohrungskontur oder einem Absatz am Bohrungsgrund oder auf der Stirnfläche des Verbindungsstutzens abstützt. Es versteht sich, daß das Dicht- und Halteelement auch eine Stützfunktion ausübt. Im Gegensatz zu bekannten Steckverbindungen mit einer äußeren sogenannten Einbauraumbegrenzung erfolgt bei der Erfindung die Begrenzung des Einbauraumes innenliegend, d. h. in bzw. an der Bohrung oder auf der Stirnfläche des Anschlußstutzens.

Die Abdichtung am Anschlußstutzen kann bei einer bevorzugten Ausführungsform der Erfindung über das Dicht- und Halteelement und/oder die Stützhülse erfolgen, welches auf der Stirnfläche des Anschlußstutzens aufliegt. Hierbei würde dann eine metallische Abdichtung erfolgen.

In einer alternativen Ausführungsform der Erfindung, in der das Anschlußgehäuse ebenfalls ein Innengewinde zum Anschluß an einen Anschlußstutzen mit entsprechendem Außengewinde aufweist, ist statt der metallischen Abdichtung zwischen Dicht- und Halteelement und der Stirnfläche des Anschlußstutzens vorgesehen, daß auf der Stirnfläche des Anschlußstutzens eine aus einem Elastomer bestehende Innendichtung angeordnet ist. Die aus einem elastomeren Material bestehende Abdichtung gewährleistet stets eine leckfreie Abdichtung und ist im übrigen sehr kostengünstig. Da die Gewindevorspannung im vorliegenden Falle über die Stützhülse bzw. das Dicht- und Halteelement und nicht über die Innendichtung aufgebracht wird, wird sichergestellt, daß die Innendichtung beim Aufschrauben der Steckverbindung nicht beschädigt und damit nicht undicht wird. Im übrigen ergeben sich bei dieser Ausführungsform sämtliche der bereits genannten Vorteile.

In Weiterbildung dieses Erfindungsgedankens ist die Innendichtung in einer Kammer aufgenommen, die durch die Stutzenstirnfläche, eine Fläche des Anschlußgehäuses und des Dicht- und Halteelementes und/oder der Stützhülse gebildet wird. Durch eine derartige Kammer wird die Dichtung gegen Übermontage gesichert.

Die folgenden Merkmale betreffen beide Ausführungsformen der Erfindung.

Um das in die Steckverbindung eingesteckte Rohr sicher zu halten, ist vorgesehen, daß die Stützhülse an ihrer dem Anschluß zugewandten Seite und/oder das Dicht- und Halteelement der Bohrungskontur des Anschlußstutzens formschlüssig angepaßt ist. In Weiterbildung dieses Gedankens ist die Stützhülse im nicht eingebauten Zustand der Steckverbindung in Richtung auf den Anschlußstutzen beweglich und aus dem Anschlußgehäuse heraus bewegbar. Hierdurch wird gewährleistet, daß die Stützhülse in einfacher Weise ausgetauscht werden kann, wenn dies erforderlich ist. Durch die Erfindung wird sichergestellt, daß bei einer geänderten Bohrungskontur des Anschlußstutzens immer nur die Stützhülse ausgetauscht werden muß, was aufgrund der Beweglichkeit im Anschlußgehäuse leicht möglich ist. Alle anderen Teile, welche im Anschlußgehäuse angeordnet sind, können identisch übernommen werden. Dies bedeutet für die jeweilige Einsatzstelle, daß nur eine sehr geringe Anzahl von Anschlußgehäusen erforderlich sind und bei veränderten Bohrungsformen immer nur die Stützhülse ausgetauscht werden muß. Insgesamt trägt dies somit zu einer erheblichen Verringerung der bereitzuhaltenden Teile bei.

Um sicherzustellen, daß das eingestecke Rohr bei Zugbelastung nicht aus der Steckverbindung herausgezogen wird, ist weiterhin erfindungsgemäß vorgesehen, daß die Stützhülse gegebenenfalls über das Dicht- und Halteelement bei Zugbelastung des Rohres Zugkräfte auf das Anschlußgehäuse überträgt. Auf diese Weise wird neben den in der Regel üblichen Schneidenringhalteelementen eine Möglichkeit geschaffen, einen Teil der Zugkraft auf den Anschlußstutzen zu übertragen.

In Weiterbildung dieses Erfindungsgedankens schlägt die Stützhülse, das Dicht- und Halteelement oder ein weiteres Element, an dem die Stützhülse oder das Dicht- oder Halteelement (in Zugrichtung des Rohres) anliegt, an einem Absatz im Anschlußgehäuse an. Hierdurch kann in einfacher Weise die Zugkraft von dem Rohr über die reibschlüssige Verbindung zwischen Stützhülse und Rohr auf die Stützhülse und von dieser entweder selbst oder über die genannten Teile auf den Absatz des Anschlußgehäuses übertragen werden. Da das Anschlußgehäuse wiederum mit dem Anschlußstutzen verschraubt ist, wird die übertragene Zugkraft auf den Anschlußstutzen übertragen. Auf diese Weise wird die Zugkraftbelastbarkeit eines in die erfindungsgemäße Steckverbindung eingesteckten Rohres erheblich vergrößert.

In einer weiteren Ausführungsform der Erfindung ist das Dicht - und Halteelement in das Gewinde des Anschlußgehäuses eingeschraubt und/oder eingepreßt. Dies bietet den enormen Vorteil, daß die im Anschlußgehäuse befindlichen Elemente wie Dichtungen, Schneidenring und etwaige Halteelemente im nicht eingesetzten Zustand des Rohres im Anschlußgehäuse gehalten werden, so daß die erfindungsgemäße Rohranschlußverbindung eine leicht austauschbare Einheit darstellt, in welcher die o. g. Teile durch das Dicht- und Halteelement nicht nur unverlierbar gehalten, sondern auch im Anschlußgehäuse fixiert werden.

Um die Zugkraftaufnahme bei der Erfindung noch weiter zu verbessern, ist weiterhin vorgesehen, daß an der Stützhülse in Richtung des Rohres weisende Haltezähne ausgebildet sind, deren lichter Durchmesser größer ist als der Innendurchmesser des Rohres.

Wenn die Stützhülse als Reduzierhülse ausgebildet ist, können auch Rohre mit kleinerem Innendurchmesser ohne weiteres bei identischem Anschlußgehäuse verwendet werden. Dies bereitet, wie bereits oben ausgeführt, daher keine Probleme, da die Stützhülse ohne weiteres austauschbar ist. Des weiteren kann auch das Gehäuse als Reduziergehäuse ausgebildet sein, wenn ein Rohr mit kleinerem Durchmesser mit einem Anschlußstutzen mit großem Durchmesser verbunden werden soll. Hierbei sind keine besonderen Verbindungsteile erforderlich, da die Verbindung direkt erfolgt.

In einem weiteren vorteilhaften Erfindungsgedanken ist auf dem Anschlußgehäuse eine Markierung oder dergleichen vorgesehen, die mit der unteren Stirnfläche bzw. dem Nutgrund der Stützhülse, an dem das Rohr im zusammengesteckten Zustand anschlägt, etwa ausgefluchtet. Dies erleichtert dem Monteur in einfacher Weise die Kontrolle, ob das Rohr ordnungsgemäß in die Steckverbindung eingesteckt ist.

Weitere Vorteile und Anwendungsmöglichkeiten der vorliegenden Erfindung ergeben sich anhand der Beschreibung von Ausführungsbeispielen und anhand der Zeichnung selbst.

Es zeigen:
- Fig. 1: eine Ansicht der erfindungsgemäßen Rohranschlußverbindung mit eingesetztem Rohr in teilweise geschnittener Darstellung,
- Fig. 2: eine Rohranschlußverbindung im nicht eingesetzten Zustand des Rohres mit dazugehörigem Rohranschlußstutzen,
- Fig. 3: eine Ansicht eines Ausschnitts einer Rohranschlußverbindung und eines dazugehörigen Rohranschlußstutzens,
- Fig. 4: eine andere Ausführungsform von Anschlußverbindung und Rohranschlußstutzen in ausschnittweiser Querschnittsdarstellung,
- Fig. 5: eine Querschnittsansicht einer Tandemdichtung nach der Erfindung,
- Fig. 6: eine Querschnittsansicht einer Quadringdichtung nach der Erfindung,
- Fig. 7: eine andere Ausführungsform der erfindungsgemäßen Rohranschlußvorrichtung in teilweise geschnittener Darstellung,
- Fig. 8: eine weitere Ausführungsform der erfindungsgemäßen Rohranschlußverbindung in ausschnittsweiser Querschnittsansicht,
- Fig. 9: eine weitere Rohranschlußverbindung als Reduzierung ohne Rohr in Querschnittsansicht,
- Fig. 10: eine Querschnittsansicht einer weiteren Ausführungsform der erfindungsgemäßen Rohranschlußverbindung mit zweiteiliger Stützhülse,
- Fig. 11: eine weitere Ausführungsform der vorliegenden Erfindung in Querschnittsansicht,
- Fig. 12: einen Querschnitt durch eine Reduzier-Stützhülse und
- Fig. 13: eine Ansicht einer erfindungsgemäßen Rohranschlußverbindung mit dargestellter Ermittlung der Rohr-Einstecklänge.

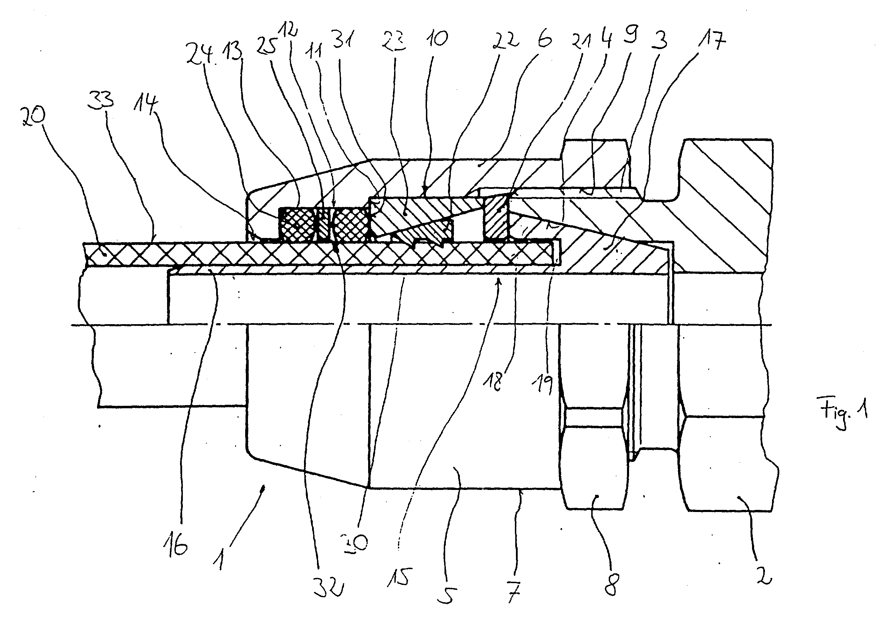

In Fig. 1 ist die erfindungsgemäße Rohranschluß- oder Steckverbindung 1 dargestellt, welche auf einen Rohranschlußstutzen 2 aufgeschraubt ist. Der Rohranschlußstutzen 2 weist ein Außengewinde 3 auf und eine nach innen konisch zulaufende Bohrung 4.

Die Steckverbindung 1 selbst weist ein Anschlußgehäuse 5 auf, welches mit einem oberen Gehäuseteil 6 versehen ist, der eine etwa zylinderförmige äußere Mantelfläche 7 hat. Des weiteren hat das Anschlußgehäuse 5 einen unteren Gehäuseteil 8, der als Sechskant ausgebildet ist. Das Anschlußgehäuse 5 ist mit einem Innengewinde 9 versehen, welches auf das Außengewinde 3 des Anschlußstutzens 2 aufgeschraubt ist. Das Innengewinde 9 ist in eine Bohrung 10 eingedreht, welche an einer Schulter 11 endet und in eine kleinere Bohrung 12 übergeht, welche wiederum an einer Schulter 13 endet. An seiner oberen Stirnseite weist das Anschlußgehäuse 5 eine Durchgangsbohrung 14 auf, deren Durchmesser dem Außendurchmesser des Rohres 20 entspricht.

Im Anschlußgehäuse 5 befindet sich eine Stützhülse 15, welche ein Hülsenteil 16 und einen konischen Zapfen 17 aufweist. Die Stützhülse 15 ist locker in dem Anschlußgehäuse 5 angeordnet und daher leicht austauschbar. Im nicht eingebauten bzw. noch nicht mit dem Rohranschlußstutzen verschraubten Zustand des Rohres würde die Stützhülse 15 aus dem Anschlußgehäuse 5 herausfallen, obwohl die Stützhülse 15 als Teil des Anschlußgehäuses anzusehen ist. Hülsenteil 16 und Zapfen 17 sind einteilig ausgebildet, können aber auch mehrteilig sein. Die äußere Fläche der Zapfen 17 ist der Kontur der Bohrung 4 angepaßt, so daß der Zapfen 17 und die Bohrung 4 eng aneinander anliegen. Der Zapfen 17 weist einen Überstand 18 auf, so daß zwischen dem Überstand 18 und dem Hülsenteil 16 eine Nut 19 ausgebildet ist, in welche das Rohr 29 eingeschoben ist. Der Nutgrund ist etwa mit der durch den Sechskant gebildeten Schulter am Übergang zum Gehäuseteil 6 ausgefluchtet. Des weiteren befinden sich in diesem Ausführungsbeispiel im Anschlußgehäuse 5 ein Dicht - und Halteelement 21, ein Schneidenring 22, ein Halteelement 23, eine als Tandemdichtung 24 ausgebildete Dichtung und ein Stützring 25. Allerdings sind nicht sämtliche der genannten Elemente zur Verwirklichung der Erfindung unbedingt erforderlich.

Das Dicht- und Halteelement 21 ist hier als ringförmiger Konus ausgebildet, welcher in das Innengewinde 9 eingeschraubt bzw. eingepreßt ist und mit seiner anschlußseitigen Fläche 26 auf der Stirnfläche 27 des Rohranschlußstutzens 2 aufliegt. Das Element 21 ist metallischer Art und stellt eine Dichtung auf dem Stutzen 2 her. Das Halteelement 23 befindet sich in der Bohrung 10 des Anschlußgehäuses 5 und wird an seinem anschlußseitigen Ende von der rohrseitigen Fläche 28 des Dicht- und Halteelements 21 begrenzt. An seinem rohrseitigen Ende stößt das Halteelement 23 an der Schulter 11 an. Durch das in das Innengewinde 9 eingeschraubte oder eingepreßte Dicht- und Halteelement ist das Halteelement 23 fest in der Bohrung 10 fixiert. Das Halteelement 23 ist als Innenkonus ausgebildet, während der Schneidenring 22 als Außenkonus ausgebildet ist, so daß der Schneidenring 22 und das Halteelement 23 an ihren Schrägen 29 zusammenwirken können, was bedeutet, daß der Schneidenring 22 entlang der Schrägen 29 des Halteelemtes 23 verschoben werden kann. Der Schneidenring 22 weist Haltezähne 30 auf, wobei der Innendurchmesser des Schneidenring kleiner ist als der Außendurchmesser des Rohres 20.

Durch das konisch ausgebildete Halteelement 23, d. h. durch seine hintere rohrseitige Stirnfläche 31 wird in der Bohrung 12 eine Kammer 32 gebildet, in welcher die Tandemdichtung 24 angeordnet ist. Zwischen den beiden Dichtelementen der Tandemdichtung 24 befindet sich der Stützring 25. Die Tandemdichtung 24 dichtet auf der Rohrmantelfläche 33 ab. Statt der zwei Dichtelemente der Tandemdichtung 24 kann auch ein einzelnes Dichtelement vorgesehen sein.

In einer alternativen Ausführungsform ist das Element 23 einteilig mit dem Anschlußgehäuse 5 ausgebildet.

In Fig. 1 ist die erfindungsgemäße Rohranschlußverbindung 1 im gesteckten und druckbeaufschlagten Zustand dargestellt. Die Stützhülse15 ist nach der Montage der Rohranschlußverbindung auf den Rohranschlußstutzen 2 zwischen dem Dicht- und Halteelement 21 und dem Rohranschlußstutzen 2, d. h. seiner Bohrung 4 gehalten und zentriert.

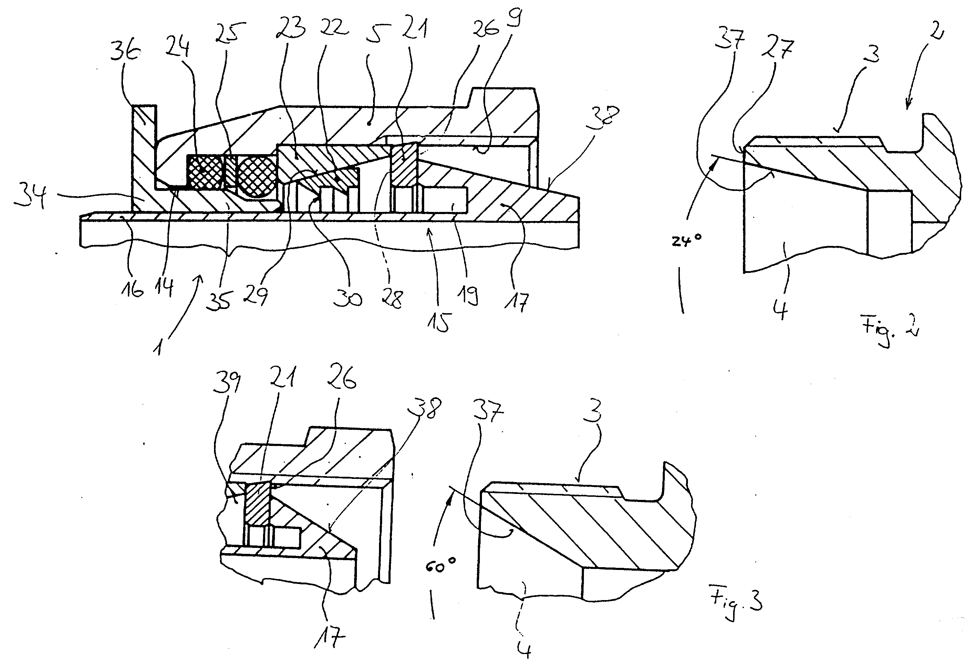

In Fig. 2 ist die Rohranschlußverbindung 1 ohne eingesetztes Rohr 20 dargestellt. In die Durchgangsbohrung 14 ist ein Halteelement 34 eingeschoben, welches einen ringförmigen Körper 35 aufweist, der sich zwischen der Tandemdichtung 24 bzw. dem Anschlußgehäuse 5 und dem Hülsenteil 16 der Stützhülse 15 befindet. Die Dicke des ringförmigen Körpers 35 ist derart gewählt, daß sich zwischen Tandemdichtung 24 und Anschlußgehäuse 5 einerseits und dem Hülsenteil 16 andererseits ein Reibschluß mit dem ringförmigen Körper gebildet wird. Dieser Reibschluß bewirkt, daß zum einen die Stützhülse 15 aus dem Anschlußgehäuse 5 nicht herausfallen kann und zum anderen, daß das Halteelement 34 ebenfalls aus dem Anschlußgehäuse 5 im nicht eingebauten bzw. eingesetzten Zustand des Rohres herausfallen kann. An den ringförmigen Körper 35 schließt sich ein etwa senkrecht von diesem abstehender Bund 36 an. Dieser Bund 36 steht mit seinem äußeren Ende über das Anschlußgehäuse 5 über.

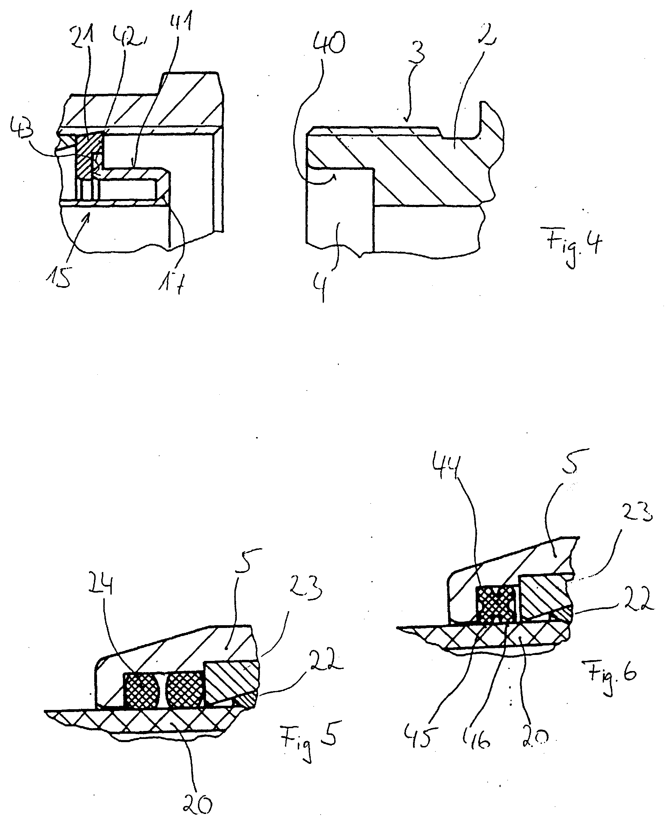

Die Bohrung 4 des Rohranschlußstutzens 2 hat im dargestellten Beispiel einen mit 24° geneigten Innenkonus 37, während der Zapfen 17 einen entsprechend mit 24° abfallenden Außenkonus 38 aufweist. Im Beispiel der Fig. 3 sind Innenkonus 37 und Außenkonus 38 um 60° geneigt und passen auch hier entsprechend aufeinander. In Fig. 3 ist zusätzlich noch dargestellt, daß hinter dem Dicht- und Halteelement 21 ein Montageraum 39 ausgebildet ist.

Zur Ausbildung der erfindungsgemäßen Rohranschlußverbindung 1 als zusammengefügte Einheit wird zunächst die Tandemdichtung 24 mit Stützring 25 in die Bohrung 12 eingesetzt. Zur Begrenzung der Tandemdichtung 24 wird anschließend das Halteelement 23 zusammen mit dem Schneidenring 22 in die Bohrung 10 eingesetzt. Sodann wird das Dicht- und Halteelement 21 eingeschraubt bzw. eingepreßt, welches ein Herausfallen der genannten Teile aus dem Anschlußgehäuse 5 verhindert und gleichzeitig das Halteelement 23 fixiert. Anschließend wird von der Anschlußseite her die Stützhülse 15 eingesetzt, welche mit ihrem Zapfen an der anschlußseitigen Fläche 26 des Dicht - und Halteelements 21 anstößt. Daraufhin wird von der rohrseitigen Seite des Anschlußgehäuses 5 in die Durchgangsbohrung 14 das Halteelement 34 eingeschoben, welches die Stützhülse 15 reibschlüssig hält und somit ein Herausfallen der Stützhülse 15 aus dem Anschlußgehäuse 5 verhindert. Hiermit bildet das Anschlußgehäuse 5 mit den darin aufgenommenen Teilen eine Baueinheit.

Zum Einsetzen des Rohres in die beschriebene Baueinheit wird die Rohranschlußverbindung 1 auf den Rohranschlußstutzen 2 aufgeschraubt, so daß die Stützhülse 15 nach Entfernen des Halteelementes 34 nicht mehr aus dem Anschlußgehäuse 5 herausfallen kann. Sodann wird das Halteelement 34 aus dem Anschlußgehäuse 5 eingeschoben, wobei das Rohr auf dem Hülsenteil 16 der Stützhülse 15 aufgeschoben wird. Das Einschieben erfolgt so lange, bis das Rohr 20 an der Stirnfläche der Nut 19 bzw. am Nutgrund anschlägt. Bei dem Einschiebvorgang wird der Schneidenring 22 aufgrund seines geringeren lichten Durchmessers in den Montageraum 39 entlang der Schräge 29 verschoben. Nach Zug- und/oder Druckbeaufschlagung des Rohres 20 bewegt sich dieses geringfügig vom Rohranschlußstutzen 2 weg, so daß der auf der Rohrmantelfläche aufliegende Schneidenring 22 entlang der Schräge 29 in Bewegungsrichtung des Rohres 20 mitgleitet und in das Rohr einschneidet. Gleichzeitig wird aufgrund der reibschlüssigen Verbindung zwischen Stützhülse und Rohr ein bestimmter Anteil der Zugkraft auf die Stützhülse übertragen. Diese Kraft wird über den Zapfen 17 der Stützhülse 15 auf das Dicht- und Halteelement 21 und von diesem über das Halteelement 23 auf die Schulter 11, und damit auf das Anschlußgehäuse 5 übertragen. Da das Anschlußgehäuse 5 wiederum mit dem Anschlußstutzen 2 verbunden ist, übernimmt somit der Anschlußstutzen die auf die Stützhülse einwirkende Zugkraft. Auf diese Weise erfolgt eine fest Verbindung der Rohranschlußverbindung 1 mit dem Rohr 20.

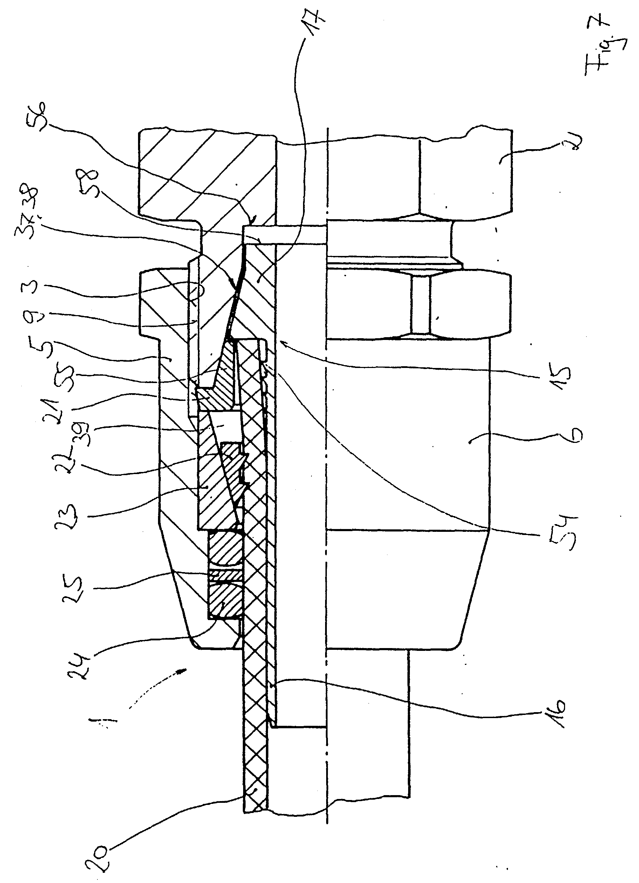

In Fig. 4 ist die Aufnahmebohrung 4 des Rohranschlußstutzens 2 zylinderförmig ausgebildet und weist daher eine ebene Fläche 40 bzw. Bohrungskontur auf. Dementsprechend ist der Zapfen 17 der Stützhülse 15 mit einer entsprechenden Fläche 41 derart versehen, daß die Flächen 40 und 41 im zusammengebauten Zustand eng aneinanderliegen. In Fig. 4 weist der Zapfen 17 an seinem Ende einen umlaufenden Rand 42 auf, welcher in einer entsprechenden Ausnehmung 43 des Dicht- und Halteelementes 21 aufgenommen ist und an dieser anliegt. In dieser Ausführungsform liegen sowohl der Rand 42 der Stützhülse 15 als auch ein Teil des Dicht- und Halteelementes 21 auf der Stirnfläche des Anschlußstutzens 2 im zusammengebauten Zustand auf.

In einer nicht dargestellten Ausführungsform liegt der Rand 42 vollständig auf der Stirnfläche des Anschlußstutzens 2 an. Ein Dicht- und Halteelement 21 ist dann nicht unbedingt erforderlich, wenn die Stützhülse an einer Schulter im Anschlußgehäuse anschlägt.

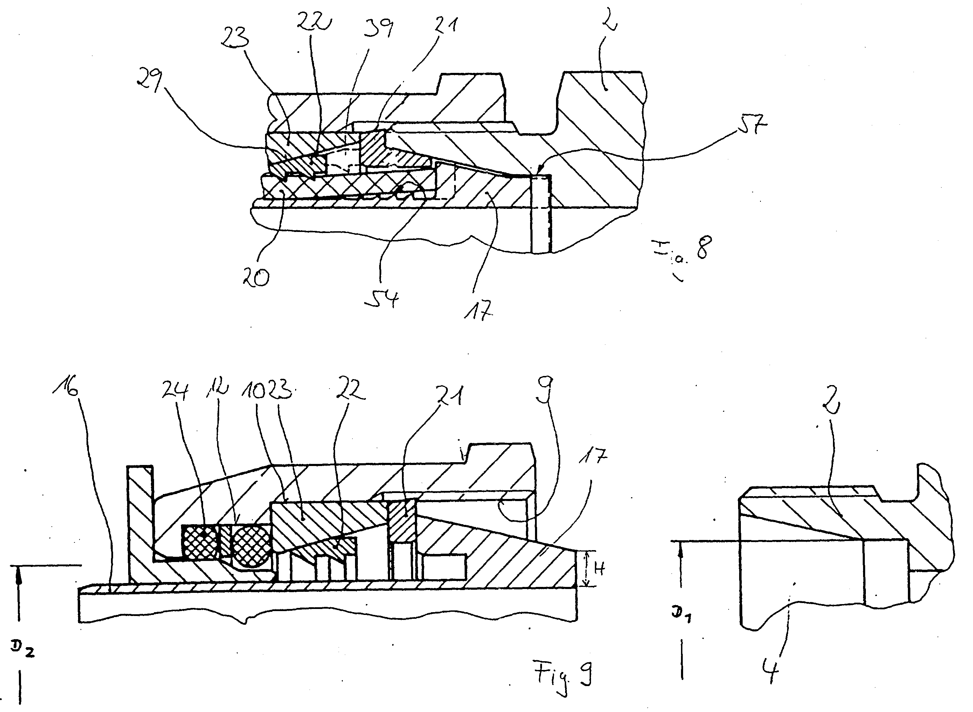

In Fig. 5 ist die Tandemdichtung 24 aus Fig. 1 dargestellt, allerdings ohne Stützring.

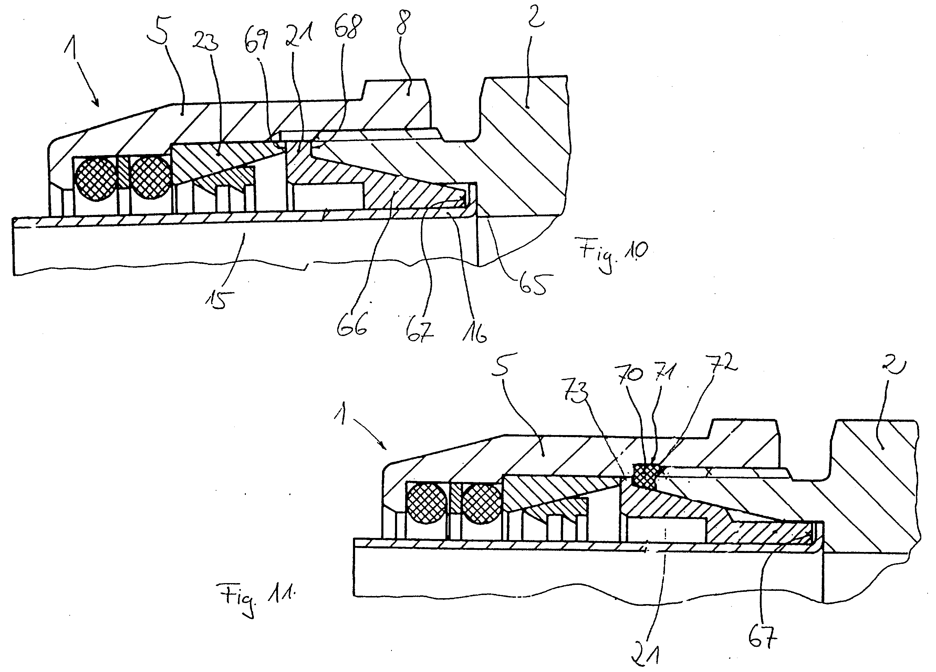

Fig. 6 zeigt statt der Tandemdichtung 24 eine Quadringdichtung 44, welche eine rohrseitige Lippe 45 und eine anschlußseitige Lippe 46 aufweist. Die Lippe 45 dient als Schmutzdichtung, während die Lippe 46 als Mediumdichtung dient.

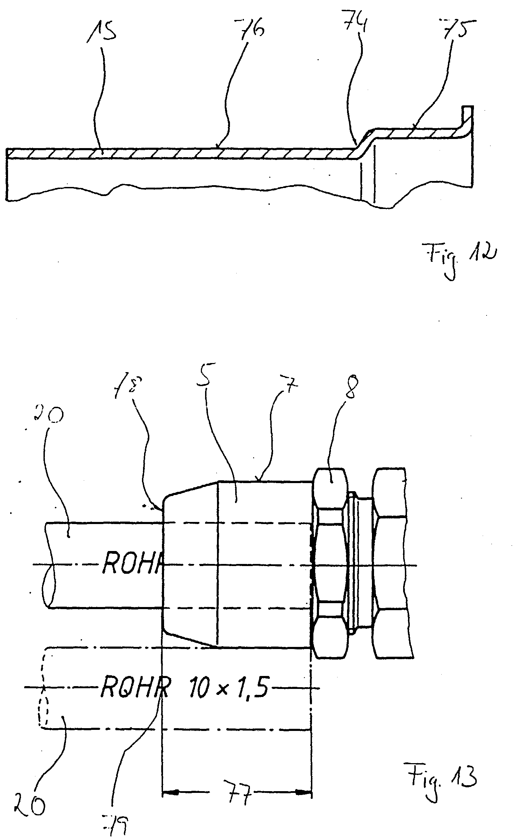

In den Fig. 7 und 8 ist ein anderes Ausführungsbeispiel der Erfindung dargestellt. Die Stützhülse 15 ist mit einer eigenen Verzahnung 54 versehen, welche sich am Übergang zwischen dem Hülsenteil 16 und dem Zapfen 17 befindet. Die Verzahnung 54 besteht aus leicht konisch in Richtung des Rohrstutzens 2 weisenden Zähnen. Ein weiterer Unterschied zu der in Fig. 1 gezeigten Ausführungsform besteht darin, daß das Dicht- und Halteelement einen Hülsenteil 55 aufweist, welcher an seiner Außenseite der Innenschäge 37 der Bohrung 4 angepaßt ist. Die in Fig. 1 beschriebene Nut 19 wird im vorliegenden Falle der Fig. 7 durch den Hülsenteil 55, die Stirnwandung des Zapfens 17 und den Hülsenteil 16 der Stützhülse 15 gebildet. Ein weiterer Unterschied zu der in Fig. 1 dargestellten Ausführungsform besteht darin, daß die Stützhülse in der Bohrung 4 zwar zentriert ist, jedoch in dieser axial beweglich ist. Beim Einsteckvorgang des Rohres 20 stößt dieses an der Stirnfläche der Nut 19 des Zapfens 17 an und drückt die Stützhülse 15 in die Bohrung 4 hinein, bis diese an der Stirnfläche 56 anstößt. Dieser Einschiebvorgang ist in Fig. 8 gestrichelt dargestellt und mit 57 bezeichnet. Gleichzeitig mit dem Einschieben der Stützhülse 15 in die Bohrung 4 wird der Schneidenring in den Montageraum 39 hineinbewegt, bis er an das Dicht- und Halteelement 21 anstößt. Dies ist in Fig. 8 ebenfalls gestrichelt dargestellt. Beim Einschieben wird der obere Teil des Rohres 20 an der Verzahnung 54 geringfügig aufgeweitet. Bei einer anschließend erfolgenden Zug- und/oder Druckbeaufschlagung wird das Rohr 20 und der Schneid enring 22 vom Stutzen 2 wegbewegt, wobei der Schneidenring 22 entlang der Schräge 29 gleitet. Dabei greifen die Zähne des Schneidenrings 22 in die Rohrwandung ein. Gleichzeitig graben sich die Zähne der Verzahnung 54 in die Innenseite des Rohres ein. Bei der Zug- und/oder Druckbeaufschlagung bewegt sich auch die Stützhülse 15 zurück und zwar in die Stellung, die in Fig. 8 gezeigt ist. In diesem Falle befindet sich im druckbeaufschlagten Zustand zwischen der Stirnfläche 56 des Rohranschlußstutzens 2 und der vorderen Stirnfläche 58 der Stützhülse 15 ein Zwischenraum (vgl. Fig. 7).Zugkräfte werden, wie bereits oben beschrieben, von der Stützhülse auf den Hülsenteil 55 des Elements 21 und schließlich auf den Anschlußstutzen 2 übertragen.

Fig. 9 zeigt ein weiteres Ausführungsbeispiel der Erfindung, bei dem die Rohranschlußverbindung 1 als Rohrreduzierung ausgebildet ist. Im dargestellten Ausführungsbeispiel weist die Bohrung 4 des Rohranschlußstutzens 2 einen Rohrdurchmesser von D1 auf. Der Außendurchmesser des Rohres beträgt D2, wobei D1 größer als D2 ist. Das Rohr ist im vorliegenden Fall nicht dargestellt. Die Rohrreduzierung von D1 auf D2 erfolgt dadurch, daß die Höhe H an der Stirnseite des Zapfens 17 entsprechend gewählt und auf D2 abgestimmt ist. Eine weitere Änderung liegt darin, daß die gesamte Innenkontur des Anschlußgehäuses 5 mit Bohrungen 10 und 12 dem geänderten kleineren Durchmesser D2 des Rohres 20 angepaßt wurde. Vorliegend ergibt sich also der Vorteil, daß es dem Monteur ohne weiteres möglich ist, an der Montagestelle das Rohr mit kleinerem Durchmesser D2 mit dem Stutzen 2 mit großem Durchmesser D1 zu verbinden.

In Fig. 10 ist eine weitere Ausführungsform der erfindungsgemäßen Rohranschlußverbindung 1 dargestellt. Die Rohranschlußverbindung 1 ist im montierten Zustand, d. h. auf den Anschlußstutzen 2 aufgeschraubt, jedoch ohne Rohr gezeigt. Der Aufbau des Anschlußgehäuses 5 entspricht dem Aufbau des Anschlußgehäuses auf den Fig. 1 bis 4. Im hier dargestellten Fall besteht die Stützhülse 15 aus dem Hülsenteil 16 und einem Kragen 65, welcher sich an das Hülsenteil 16 anschließt und an der Stirnfläche der Bohrung 4 des Rohranschlußstutzens 2 anliegt. Der Zapfenteil der Stützhülse aus den Fig. 1 bis 4 wird im vorliegenden Fall aus dem Dicht- und Halteelement 21 gebildet. Dieser Zapfenteil ist in Fig. 10 mit 66 bezeichnet. Das stirnseitige Ende 67 des Zapfenteils 66 liegt an dem Kragen 65 an. Über den Kragen 65 und das stirnseitige Ende 67 des Zapfenteils 66 des Dicht- und Halteelementes 21 erfolgt die Stützhülsenzugkraftübertragung. Bei der Stützhülse 15 kann es sich um ein kostensparendes Blechformteil handeln. Die Abdichtung kann in diesem Beispiel über die Stirnflächen 68 und 69 beispielsweise metallisch erfolgen. Alternativ kann die Stützhülse 15 auch einteilig mit dem Dicht- und Haltelelement 21 ausgebildet sein, was jedoch nicht dargestellt ist.

Figur 11 zeigt eine weitere Ausführungsform der erfindungsgemäßen Rohranschlußverbindung 1. Der Unterschied zu der Ausführungsform nach Fig. 10 besteht darin, daß die Gewindeabdichtung bei dieser Ausführungsform über eine Weichdichtung 70 erfolgt. Bei dieser Weichdichtung kann es sich um eine Dichtung aus einem elastomeren Material handeln. Die Dichtung 70 ist in einer Kammer 71 angeordnet, welche zwischen Rohrstutzen 2, Anschlußgehäuse 5 und Stütz- und Dichtelemente 21 ausgebildet ist. Die Weichdichtung 70 ist hierbei in einer Ausdrehung oder Hinterschneidung 72 des Anschlußgehäuses 5, welche sich an das Innengewinde 9 anschließt, gehalten. Aufgrund dieser Hinterschneidung 72 wird ein Herausfallen der Weichdichtung 70 verhindert.
Die Weichdichtung 70 bewirkt im übrigen auch, daß das Stütz- und Halteelement 21 bzw. die Stützhülse 15 bei einteiliger Ausführung mit Stütz- und Halteelement im Anschlußgehäuse 5 gehalten wird, da ein Überstand 73 des Stütz- und Halteelementes 21 die Dichtung 70 hintergreift. Die hier als Rundschnurring ausgebildete Innendichtung 70 liegt im zusammengebauten Zustand gemäß Fig. 11 zumindest an der Rohrstutzenstirnfläche, der Hinterschneidungsfläche und der in diesem Ausführungsbeispiel konisch ausgebildeten Mantelfläche des Stütz- und Halteelementes 21 eng an. Durch die Reibung der Dichtung 70 an der Mantelfläche des Stütz- und Halteelementes 21 sowie durch den Überstand 73 wird ein Herausfallen des Stütz- und Halteelementes 21 aus dem Anschlußgehäuse 5 verhindert. Die Kammer 71 ist stutzenseitig durch einen Ringspalt zugänglich, dessen Durchmesser geringer ist als der Durchmesser der Dichtung 70. Hierdurch ergibt sich die Unverlierbarkeit der Dichtung 70 in der Kammer 71.

Im nicht aufgeschraubten Zustand ohne Rohr ist es bei dieser Ausführungsform und auch bei der nach Fig. 10 zweckmäßig, ein wie in Fig. 2 beschriebenes Halteelement 34 zur Verhinderung des Herausfallens der Stützhülse 15 aus dem Anschlußgehäuse 5 vorzusehen.

Die Stützhülse der vorbeschriebenen Figuren kann auch als Reduzierhülse ausgebildet sein, wie dies in Fig. 12 dargestellt ist. Hierbei ist die Kontur 74 der Stützhülse so ausgelegt, daß der Durchmesser 75 im Bereich des Dicht- und Halteelementes gemäß den Fig. 10 und 11 für die geringstmögliche Rohrwandung vorgesehen und der Durchmesser 76 auf der Rohreinstecklänge variabel ist.

Schließlich zeigt die Fig. 13 die Möglichkeit der Rohreinstecklängen-Bestimmung 77. Das Anschlußgehäuse 5 mit seiner Überwurfmutter bzw. Sechskant 8 ist in seiner Mantelfläche 7 auf die Einstecklänge des Rohres 20 in der Rohranschlußverbindung 1 überdreht. Das Rohr 20 wird vor der Montage außen bis zum Sechskant 8 zur Anlage gebracht. Statt des Sechskants kann auch eine andere Form der Markierung (z. B. eine Kerbe) vorgesehen sein. Die rückseitige Stirnfläche 78 des Anschlußgehäuses 5 zeigt auf eine Stelle der Rohrmarkierung 79, wobei es sich beispielsweise um eine Beschriftung des Rohres 20 handeln kann. Der Monteur kann diese Stelle auch in irgendeiner Form markieren. Diese Stelle der Rohrmarkierung 79 muß nach der Montage bündig mit der Stirnfläche 78 des Anschlußgehäuses 5 abschließen. In dieser Position ist das Rohr ordnungsgemäß in die Verbindung 1 eingesteckt, da der Sechskant bzw. die Markierung etwa mit dem Nutgrund, an dem das Rohr nach ordnungsgemäßem Einstecken anschlägt, ausgefluchtet ist.

### Bezugszeichenliste:

- 1: Rohranschlußverbindung
- 2: Rohranschlußstutzen
- 3: Außengewinde
- 4: Bohrung
- 5: Anschlußgehäuse
- 6: oberer Gehäuseteil
- 7: Mantelfläche
- 8: unterer Gehäuseteil, Sechskant
- 9: Innengewinde
- 10: Bohrung
- 11: Schulter
- 12: Bohrung
- 13: Schulter
- 14: Durchgangsbohrung
- 15: Stützhülse
- 16: Hülsenteil
- 17: Zapfen
- 18: Überstand
- 19: Nut
- 20: Rohr
- 21: Dicht- und Halteelement
- 22: Schneidenring
- 23: Halteelement
- 24: Tandemdichtung
- 25: Stützring
- 26: anschlußseitige Fläche
- 27: Stirnfläche
- 28: rohrseitige Fläche
- 29: Schräge
- 30: Haltezähne
- 31: Stirnfläche
- 32: Kammer
- 33: Rohrmantelfläche
- 34: Halteelement
- 35: ringförmiger Körper
- 36: Bund
- 37: Innenkonus
- 38: Außenkonus
- 39: Montageraum
- 40: Fläche
- 41: Fläche
- 42: Rand
- 43: Ausnehmung
- 44: Quadringdichtung
- 45: Lippe
- 46: Lippe
- 54: Verzahnung
- 55: Hülsenteil
- 56: Stirnfläche
- 57: Einschiebvorgang
- 58: Stirnfläche
- 65: Kragen
- 66: Zapfenteil
- 67: stirnseitiges Ende
- 68: Stirnfläche
- 69: Stirnfläche
- 70: Weichdichtung
- 71: Kammer
- 72: Hinterschneidung
- 73: Überstand
- 74: Kontur
- 75: Durchmesser
- 76: Durchmesser
- 77: Rohreinstecklängenbestimmung
- 78: Stirnfläche
- 79: Rohrmarkierung
- D1: Durchmesser
- D2: Rohrdurchmesser
- H: Höhe

## Patentansprüche

1. Rohranschlußverbindung, insbesondere für Kunststoffrohre, bei der ein Rohranschlußstutzen (2), der eine Bohrung (4) aufweist mit einer durch eine Verschraubung verspannbaren Rohrsteckverbindung zusammenwirkt, welche ein Anschlußgehäuse (5) mit einer Stützhülse (15) und mit einem Schneidring (22), der mit dem Rohr entlang einer Schräge (29) verschiebbar ist und in das Rohr einschneidet und ein Dichtelement (21) aufweist, dadurch gekennzeichnet, daß die Verschraubung ein Außengewinde (3) des Anschlußstutzens (2) und ein Innengewinde (9) des Anschlußstutzengehäuses (5) aufweist, wobei das Dichtelement als Halteelement (21) im Anschlußgehäuse angeordnet ist und daß die Stützhülse (15) oder das Dicht- und Halteelement (21) an der Bohrungskontur oder einem Absatz im Bohrungsgrund oder auf der Stirnfläche (27) des Rohranschlußstutzens abstützbar ist und die Verspannung über die Stützhülse (15) oder das Dicht- und Halteelement (21) aufbringbar ist.

2. Rohranschlußverbindung nach Anspruch 1, dadurch gekennzeichnet, daß das Dicht- und Halteelement (21) und/oder die Stützhülse (15) auf der Stirnfläche (27) des Anschlußstutzens (2) abdichtet/abdichten.

3. Rohranschlußverbindung nach Anspruch 2, dadurch gekennzeichnet, daß eine aus einem Elastomer bestehende Innendichtung (70) auf der Stirnfläche des Anschlußstutzens (2) vorgesehen ist, die in einer Kammer (71) aufgenommen ist, die durch die Stutzenstirnfläche, eine Fläche des Anschlußgehäuses (5) und des Dicht- und Halteelementes (21) und/oder der Stützhülse (15) gebildet wird.

4. Rohranschlußverbindung nach einem oder mehreren der vorhergehenden Ansprüche, dadurch gekennzeichnet, daß die Stützhülse (15) an ihrer dem Anschlußstutzen (2) zugewandten Seite und/oder das Dicht- und Halteelement (21), soweit es in die Bohrung des Anschlußstutzens hineinragt, der Bohrungskontur des Anschlußstutzens (2) formschlüssig angepaßt ist/sind.

5. Rohranschlußverbindung nach einem oder mehreren der vorhergehenden Ansprüche, dadurch gekennzeichnet, daß die Stützhülse (15) im nicht eingebauten Zustand in Richtung auf den Anschlußstutzen (2) beweglich und aus dem Anschlußgehäuse (5) heraus bewegbar ist.

6. Rohranschlußverbindung nach einem oder mehreren der vorhergehenden Ansprüche, dadurch gekennzeichnet, daß die Stützhülse (15) ggf. über das Dicht- und Halteelement (21) bei Zugbelastung des Rohres Zugkräfte auf das Anschlußgehäuse (5) überträgt.

7. Rohranschlußverbindung nach Anspruch 5, dadurch gekennzeichnet, daß die Stützhülse (15), das Dicht- und Halteelement (21), das in Zugrichtung des Rohres an der Stützhülse anliegt, oder ein weiteres Element (23), das an der Stützhülse (15) oder dem Dicht- und Halteelement (21) in Zugrichtung des Rohres anliegt, an einer Schulter (11) im Anschlußgehäuse (5) anschlägt.

8. Rohranschlußverbindung nach einem oder mehreren der vorhergehenden Ansprüche, dadurch gekennzeichnet, daß das Dicht- und Halteelement (21) in das Innengewinde (9) des Anschlußgehäuses (5) eingeschraubt und/oder eingepreßt wird.

9. Rohranschlußverbindung nach einem oder mehreren der vorhergehenden Ansprüche, dadurch gekennzeichnet, daß an der Stützhülse (15) in Richtung des Rohres (20) weisende Haltezähne (54) ausgebildet sind, deren lichter Durchmesser größer ist als der Innendurchmesser des Rohres (20).

10. Rohranschlußverbindung nach einem oder mehreren der vorhergehenden Ansprüche, dadurch gekennzeichnet, daß die Stützhülse (15) als Reduzierhülse ausgebildet ist und/oder daß das Anschlußgehäuse (5) als Reduzierung zum Anschlußstutzen (2) ausgebildet ist.

11. Rohranschlußverbindung nach einem oder mehreren der vorhergehenden Ansprüche, dadurch gekennzeichnet, daß auf der Anschlußgehäuse (2) eine Markierung wie Schulter oder Kerbe vorgesehen ist, die mit der unteren Stirnfläche, bzw. dem Nutgrund, der Stützhülse (15) oder des Dicht- und Halteelementes (21), an der das Rohr im zusammengesteckten Zustand anschlägt, ausgefluchtet ist.

## Claims

1. A pipe joint connection particularly for pipes made of synthetic materials, in which a pipe joint fitting (2) comprising a drilled hole (4) operates in conjunction with a pipe insertion connector which can be secured in position by a screw union and which includes a sealing element (21) and a joint housing (5) with a retaining sleeve (15) and with a cutting ring (22) that cuts into the pipe after being attached to it by a sliding movement along a bevelled edge (29), characterised in that the screw union comprises an outer thread (3) of the joint fitting (2) and an inner thread (9) of the joint fitting housing (5) whereby the scaling element is arranged within the joint housing as a holding element (21), and that the retaining sleeve (15) or the sealing and holding element (21) is capable of being supported on the contour surface of the drilled hole or on a ledge in the bottom of the drilled hole or on the end face surface (27) of the pipe joint fitting, and that the positional securing can be effected by means of the retaining sleeve (15) or the sealing and holding element (21).

2. A pipe joint connection according to claim 1, characterised in that the sealing and holding element (21) and/or the retaining sleeve (15) forms/form a seal on the surface of the end face (27) of the joint fitting (2).

3. A pipe joint connection according to claim 2, characterised in that an inner seal (70) consisting of an elastomeric material is provided on the end face of the joint fitting (2), said inner seal (70) being held within a chamber (71) which is formed by the end face of the fitting, a surface of the joint housing (5) and of the sealing and holding element (21) and/or of the retaining sleeve (15).

4. A pipe joint connection according to one or several of the preceding claims, characterised in that the retaining sleeve (15) on its side surface facing towards the joint fitting (20) and/or the sealing and holding element (21) in as far as it projects into the drilled hole of the joint fitting, is/are adapted to be a positive fit on the contour surface of the drilled hole of the joint fitting (2).

5. A pipe joint connection according to one or several of the preceding claims, characterised in that the retaining sleeve (15), in its non-inserted state, is moveable in a direction towards the joint fitting (2) and is capable of being withdrawn from within the joint housing (5).

6. A pipe joint connection according to one or several of the preceding claims, characterised in that, if applicable, the retaining sleeve (15), whenever any tension load is applied to the pipe, exerts tractive force on the joint housing (5) by means of the sealing and holding element (21).

7. A pipe joint connection according to claim 5, characterised in that the retaining sleeve (15) acts upon the sealing and holding element (21) that is in contact with the retaining sleeve in the direction of travel of the pipe, or an additional element (23) that is in contact with the retaining sleeve (15) or with the sealing and holding element (21) in the direction of travel of the pipe, and causes it to come to rest against a shoulder (11) within the joint housing (5).

8. A pipe joint connection according to one or several of the preceding claims, characterised in that the sealing and holding element (21) is screwed and/or pressed into the inner thread (9) of the joint housing (5).

9. A pipe joint connection according to one or several of the preceding claims, characterised in that, located on the retaining sleeve (15) and pointing in the direction of the pipe, there are holding teeth (54) the inside diameter of which is greater than the internal diameter of the pipe (20).

10. A pipe joint connection according to one or several of the preceding claims, characterised in that the retaining sleeve (15) is constructed as a reducing sleeve and/or that the joint housing (5) is constructed as a reduction to the joint fitting (2).

11. A pipe joint connection according to one or several of the preceding claims, characterised in that, on the joint housing (2), a marking such as a shoulder or a notch is provided, which is aligned with the lower end face, or, as the case may be, with the base of the groove, of the retaining sleeve (15) or of the sealing and holding element (21), and against which the pipe, in its contracted state, comes to rest.

## Revendications

1. Raccord de tuyau, notamment pour des tuyaux en matière plastique, pour lequel un coude de rallonge (2) qui présente un creux (4) concourt avec un connecteur de tuyau qui peut être serré par une union, connecteur qui présente un boîtier de raccordement (5) avec une douille d'appui (15) et une bague coupante (22) qui peut être déplacée avec le tuyau le long d'une inclination (29) et entaille le tuyau, et un élément d'étanchéité (21), caractérisé en ce que l'union présente un filetage mâle (3) du coude de rallonge (2) et un filet femelle (9) du boîtier de raccordement (5), l'élément d'étanchéité étant disposé en tant qu'élément de retenue (21) dans le boîtier de raccordement, en ce que la douille d'appui (15) ou l'élément d'étanchéité et de retenue (21) peut s'appuyer sur le contour du creux, sur une interruption dans le fond du creux ou sur la face frontale (27) du coude de rallonge et en ce que le serrage peut être effectué au-dessus de la douille d'appui (15) ou de l'élément d'étanchéité et de retenue (21).

2. Raccord de tuyau selon la revendication 1, caractérisé en ce que l'élément d'étanchéité et de retenue (21) et/ou la douille d'appui (15) étanchent sur la surface frontale (27) du coude de rallonge (2).

3. Raccord de tuyau selon la revendication 2, caractérisé en ce qu'un joint d'étanchéité intérieur (70) se composant d'un élastomère est prévu sur la surface frontale du coude de rallonge (2), joint d'étanchéité qui est logé dans une chambre (71) qui est formée par la surface frontale du coude, une surface du boîtier de raccordement (5) et de l'élément d'étanchéité et de retenue (21) et/ou de la douille d'appui (15).

4. Raccord de tuyau selon l'une ou plusieurs des revendications précédentes, caractérisé en ce que la douille d'appui (15), sur sa face tournée vers le coude de rallonge (2), et/ou l'élément d'étanchéité et de retenue (21), dans la mesure où il dépasse dans le creux du coude de rallonge (2) sont adaptés avec engagement positif au contour du creux du coude de rallonge (2).

5. Raccord de tuyau selon l'une ou plusieurs des revendications précédentes, caractérisé en ce que la douille d'appui (15), lorsqu'elle n'est pas encastrée, est mobile en direction du coude de raccordement (2) et peut être sortie du boîtier de raccordement (5).

6. Raccord de tuyau selon l'une ou plusieurs des revendications précédentes, caractérisé en ce que la douille d'appui (15) transmet des forces de traction sur le boîtier de raccordement (5), le cas échéant par l'intermédiaire de l'élément d'étanchéité et de retenue (21), pour une contrainte de traction du tuyau.

7. Raccord de tuyau selon la revendication 5, caractérisé en ce que la douille d'appui (15), l'élément d'étanchéité et de retenue (21) qui est contigu à la douille d'appui dans le sens de traction du tuyau, ou un élément supplémentaire (23) qui est contigu à la douille d'appui (15) ou à l'élément d'étanchéité et de retenue (21) dans le sens de traction du tuyau butent contre un épaulement (11) dans le boîtier de raccordement (5).

8. Raccord de tuyau selon l'une ou plusieurs des revendications précédentes, caractérisé en ce que l'élément d'étanchéité et de retenue (21) est vissé et/ou enfoncé dans le filet femelle (9) du boîtier de raccordement (5).

9. Raccord de tuyau selon l'une ou plusieurs des revendications précédentes, caractérisé en ce que des dents d'accrochage (54) dirigées dans le sens du tuyau sont conçues sur la douille d'appui (15), dents d'accrochage dont le diamètre intérieur est supérieur au diamètre intérieur du tuyau (20).

10. Raccord de tuyau selon l'une ou plusieurs des revendications précédentes, caractérisé en ce que la douille d'appui (15) se présente sous la forme d'une douille de réduction et/ou en ce que le boîtier de raccordement (5) se présente sous la forme d'une réduction du coude de rallonge (2).

11. Raccord de tuyau selon l'une ou plusieurs des revendications précédentes, caractérisé en ce que sur le boîtier de raccordement (2) est prévu un repère comme un épaulement ou une entaille, repère qui est aligné avec la surface frontale inférieure, ou le fond de l'encoche, de la douille d'appui (15) ou de l'élément d'étanchéité et de retenue (21), surface frontale sur laquelle bute le tuyau complet.
